# EUROPEAN PATENT APPLICATION

(11) **EP 2 677 189 A1**
(43) Date of publication of application: **25.12.2013**
(21) Application number: 13170574.1
(22) Date of filing: 05.06.2013
(51) Int. Cl.: F16D 23/02, F16H 3/78

(54) **Gearbox for a vehicle and a vehicle including such a gearbox**

(30) Priority: 19.06.2012 SE 1250645
(71) Applicant: Scania CV AB, 151 87 Södertälje (SE)
(72) Inventor: Lundin, Jonas, 17960 Stenhamra (SE)

(57) **Abstract**

The invention relates to a gearbox for vehicles, comprising a planetary gear set (14) with an axially displaceable internal ring gear (22); two coupling rings (34, 35) on either side of the planetary gear (14) with which the internal ring gear (22) can be switched between gearbox ranges; at least two synchronizer rings (36), of which there is at least one synchronizer ring (36) between each coupling ring (34, 35) and planetary gear (14), said synchronizer rings (36) being not only rotatable in a limited manner relative to the internal ring gear (22) but also have external locking teeth (40), that during the gear shifting movement lock the axial displacement and connection with the relevant coupling ring (34, 35) of the internal ring gear (22) before synchronous rotation is achieved;
wherein the ends (48) of internal ring gear (22) have internally arranged locking devices (50) for transmitting axial force from the internal ring gear (22) to the relevant synchronizer ring (36) in order to achieve contact between friction surfaces (38, 39) on the relevant synchronizer ring (36) and coupling ring (34, 35) during gear shifting. The internal ring gear (22) has two internal, circumferential grooves (52), one at each end (48) of the internal ring gear (22). The synchronizer rings (36) are provided with at least one external projection (60) with a contact surface (62) designed to interact with a circumferential surface (66) on each internal, circumferential groove (52) in the internal ring gear (22) in order to limit the axial movement of the internal ring gear (22). The invention also relates to a vehicle comprising such a gearbox.

## Description

### BACKGROUND AND PRIOR ART OF THE INVENTION

The present invention relates to a gearbox for vehicles according to the preamble 1 to the claim. The invention also relates to a vehicle that comprises such a gearbox according to the preamble 13 of the claim.

Vehicles, and especially heavier vehicles, such as trucks, often have a gearbox, also called a range gearbox, connected to the main gearbox in order to double the number of possible gear ratios. Such an auxiliary gearbox usually comprises a planetary gear set which has a low and high range, with which the possible gear ratios of the main gearbox can be divided into low range and high range modes. In low range mode downshifting takes place through the planetary gear, and in high range mode there is no reduction ratio in the planetary gear.

The range gearbox is arranged between the main gearbox and a propeller shaft connected to the drive wheels of the vehicle. The range gearbox is accommodated in a gearbox housing and comprises an input shaft connected to the main gearbox, an output shaft and a planetary gear arranged between input shaft and output shaft. The planetary gear usually comprises three components rotatably arranged relative to each other, namely a sun wheel, a planet carrier and an internal ring gear. Knowledge of the number of teeth on the sun wheel and internal ring gear means that the relative speeds of the three components be determined during operation. In a range gearbox the sun wheel can be non-rotatably connected to the input shaft, a number of planet wheels engaging said sun gear, said planet wheels are rotatably journalled on the planet carrier non-rotatably connected output shaft and an axially displaceable internal ring gear that surrounds and engages in the planet wheels. The teeth of the sun wheel, planet wheels and internal ring gear can be helical, that is angled in relation to the common axis of rotation of the sun wheel, planet carrier and internal ring gear. By cutting the teeth obliquely a reaction force is obtained from the gears in the planetary gear in the direction of the axis of rotation. The direction of the reaction force depends on the direction in which the gears of the planetary gear are cut. This means that the reaction forces can act backwards or forwards in the direction of the axis of rotation.

The gearbox's low and high ranges are obtained through the internal ring gear being displaced axially between the low range position, in which the internal ring gear is rotationally locked relative to the gearbox housing, and high range position in which the internal ring gear is rotatable relative to the gearbox housing. The planetary gear comprises two coupling rings arranged on either side of the internal ring gear, a high coupling ring and a low coupling ring, and two synchronizer rings arranged on each side of the internal ring gear. The purpose of the synchronizer rings is to provide synchronous gear shifting.

In order to obtain good synchronization in this type of range gearbox, the surface of the synchronizer ring teeth, which face the internal ring gear and are designed to engage the internal ring gear teeth during synchronization, must be angled relative to the axis of rotation of the synchronizer ring, said angle being balanced against the braking torque that the synchronizer ring transmits to the internal ring gear in order to achieve synchronous speed. This means that said angle must be designed so that the teeth on the synchronizer ring engage with that portion of the internal ring gear teeth that are at said angle and act on the internal ring gear sufficiently to achieve synchronous speed and then disengage from the portion of the internal ring gear teeth at said angle when the internal ring gear is to engage with the coupling ring when synchronous speed has been obtained. To ensure that synchronous speed is reached before the internal ring gear passes the synchronizer ring axially, the teeth of the synchronizer ring must not disengage from the internal ring gear teeth too easily.

When the synchronizer ring teeth have disengaged from the ring gear teeth when synchronous speed has been obtained between the internal ring gear and the coupling ring, the internal ring gear will be axially displaced so that the synchronizer ring is moved inwards into the internal ring wheel and stops in an axial position relative to the internal ring wheel, said axial position being determined by the position at which the synchronizer ring meets and engages with the planet wheels of the planetary gear.

The axial freedom of movement of the internal ring gear is limited by the geometric design of the teeth of the internal ring gear and coupling ring. At the axial end positions of the internal ring gear the end faces come into contact with a circumferential end face on the tips of the teeth of the internal ring gear on each coupling ring, this means that the internal ring gear can no longer be displaced axially.

A number of spring-loaded balls are arranged in the internal ring gear, the purpose of these is to ensure that pre-synchronization occurs. The spring-loaded balls act on a number of bars arranged on the synchronizer ring to ensure that the ratchet teeth of the synchronizer ring are in the correct position relative to the teeth of the internal ring gear when synchronisation is to start.

However, to ensure that the synchronizer ring comes into proper contact with the coupling ring, a number of spring-loaded balls must be arranged and distributed more or less evenly around the inside of the internal ring gear. The spring force acting on each ball must be more or less equal for all the springs so that the synchronization ring is not loaded asymmetrically, which could have a negative effect on the function of the gearbox and synchronization process. The failure of a spring or ball will compromise the entire gearbox function. The known embodiment using a number of spring-loaded balls also means that the manufacture and assembly of the gearbox is made more difficult, which increases costs.

Document WO0155620 discloses a synchronization device in a planetary gear in which a locking device in the form of a radially compressible wire ring is arranged in a circumferential groove in the internal ring gear and synchronizer ring. This means that the wire ring replaces the aforementioned spring-loaded balls, eliminating the disadvantages of the spring-loaded balls described above. However, the circumferential groove in the internal ring gear means that the aforementioned geometry of the teeth of the internal ring gear and coupling ring, that limit the freedom of movement of the internal ring gear axially, is no longer possible while maintaining the length of the gearbox. According to existing technology the limitation of the freedom of movement of the internal ring gear axially has been resolved by one axial end position of the internal ring gear being in contact with a reaction plate non-rotatably mounted with the coupling ring and the other axial end position being fixed by the internal diameter of the internal ring gear, corresponding to the top diameter of the internal teeth of the internal ring gear, being made smaller than the minimum diameter of the coupling ring, corresponding to the bottom diameter of the coupling ring gears.

Despite existing solutions there is a need to develop a gearbox with devices that limit freedom of movement of the internal ring gear axially. There is also a risk of noise occurring during shifting in existing gearboxes when the internal ring gear is moved to its axial end positions. In addition a compact gearbox is desirable, with limited axial dimensions, said gearbox being simple to manufacture and install, and a gearbox that exhibits a high level of reliability and availability performance.

### SUMMARY OF THE INVENTION

The object of the present invention is to provide a gearbox which exhibits a high level of reliability and availability performance.

A further object of the invention to provide a compact gearbox with a limited axial extension.

Another object of the invention is to provide a gearbox which is simple to manufacture and install.

These objects are achieved with a gearbox of the kind defined in the introduction, characterized by the features specified in claim 1.

These objects are also achieved by a vehicle comprising a gearbox of the kind defined in the introduction, which is characterized by the features specified in claim 13.

Such a gearbox exhibits a high level of reliability and availability performance as it comprises a limited number of components that interact with each other. Using a few interacting components reduces the number of possible fault sources. Few components also means that the gearbox is easy to manufacture and install and simple to maintain. In one embodiment several projection are evenly distributed around the circumference of the synchronizer rings, these projections mean that the gearbox can be made compact with limited axial dimensions and that noise during gear shifting is avoided. This means that separate silencers to prevent noise are eliminated.

Further advantages of the invention are contained in the following detailed description.

### BRIEF DESCRIPTION OF THE DRAWINGS

The following is an example of a preferred embodiment of the invention with reference to the attached drawings, in which:
- Figure 1: shows a vehicle in side view with a gearbox of the present invention
- Figure 2: shows a perspective view of the components of a gearbox of the present invention
- Figure 3: shows a perspective view of the components of a gearbox of the present invention
- Figure 4: shows a detailed view of a synchronizer ring in a gearbox of the present invention
- Figures 5-9: show a gear shifting process in a gearbox of the present invention, and
- Figures 10-12: show a gear shifting process in a gearbox of the present invention.

### DETAILED DESCRIPTION OF ONE PREFERRED EMBODIMENT OF THE INVENTION

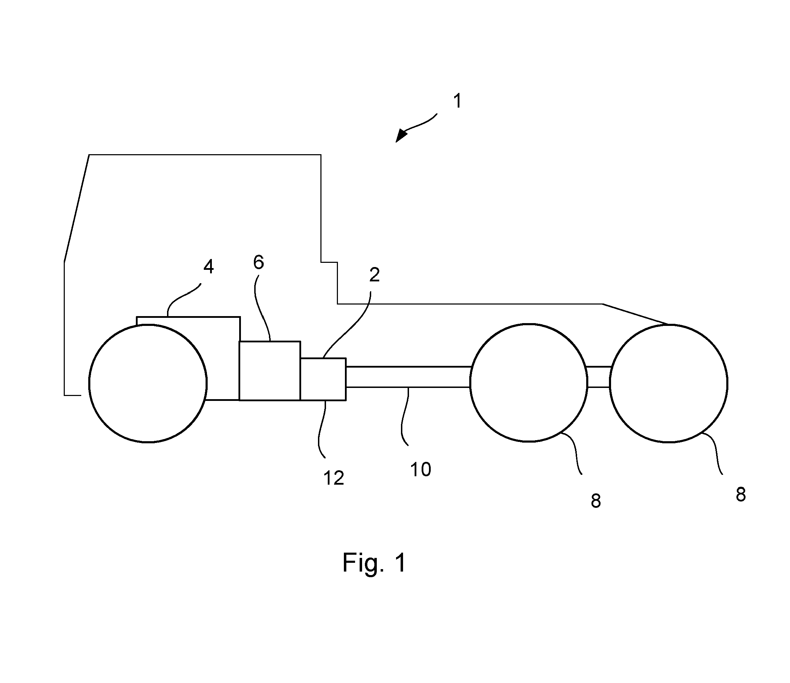

Figure 1 shows a side view of a vehicle 1, such as a truck, comprising a gearbox 2 of the present invention. An internal combustion engine 4 is connected to a main gearbox 6, which in turn is connected to the gearbox 2 of the present invention. The gearbox 2 is further connected to the drive wheels 8 of vehicle 1 through a propeller shaft 10. Gearbox 2 of the present invention is also called a range gearbox, the object of which is to double the number of possible gear ratios. The gearbox 2 is surrounded by a gearbox housing 12.

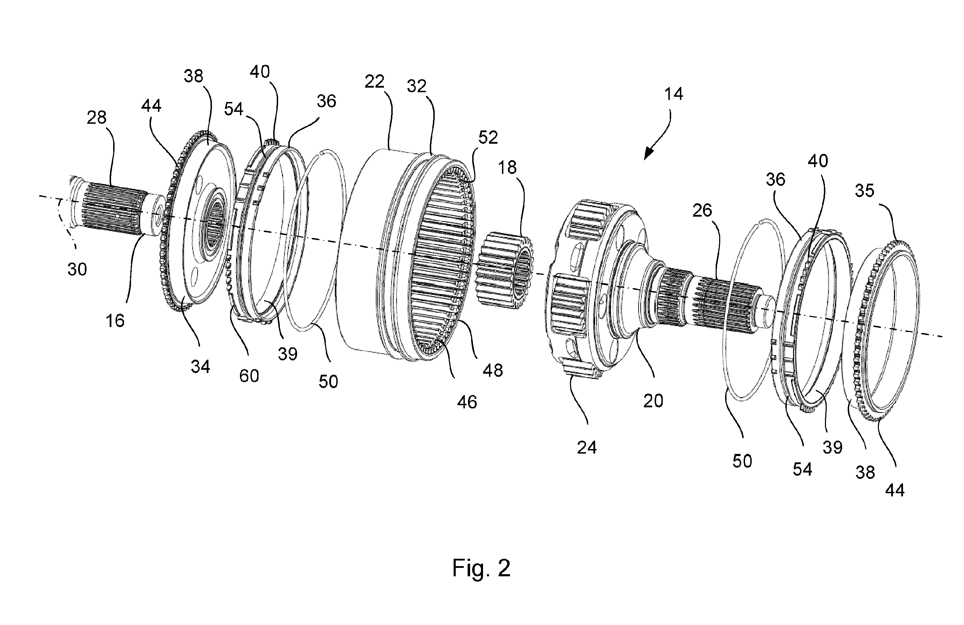

Figure 2 shows a perspective view of the components of a gearbox 2 of the present invention. The gearbox 2 comprises a planetary gear 14 which has a low and high gear, with which the gear ratios of main gearbox 6 can be split into a low range and a high range. In the low range mode downshifting takes place through planetary gear 14, and in high range mode the gear ratio is 1:1.

The gearbox 2 is accommodated in a gearbox housing 12 (Figure 1) and comprises an input shaft 16 which can consist of an output shaft from the main gearbox 6. The planetary gear 14 comprises three main components that are rotatably arranged in relation to each other, namely a sun wheel 18, a planet carrier 20 and an internal ring gear 22. There are a number of journalled planet wheels 24 arranged on planet carrier 20. Gearbox 2 output shaft 26, which is connected to vehicle 1 propeller shaft 10, is also arranged on planet carrier 20. Knowledge of the number of teeth on the sun wheel 18 and internal ring gear 22 means that the relative speeds of the three components can be determined during operation. By means of splines 28 sun wheel 18 is non-rotatably connected with the input shaft 16 and planet wheels 24 engage with the said sun wheel 18. The internal ring gear 22 is axially displaceable and encloses and engages in the planet wheels 24. The teeth of the sun wheel 18, planet wheels 24 and internal ring gear 22 are helical if possible, that is to say that they have an angle in relation to the common axis of rotation 30 of the sun wheel 18, planet carrier 20 and internal ring gear 22. By cutting the teeth obliquely a reaction force is obtained from the gears in the planetary gear 14 in the direction of the axis of rotation. The direction of the reaction force depends on the direction in which the gears of the planetary gear 14 are cut. This means that the reaction forces can act backwards or forwards in the direction of the axis of rotation 30.

The gearbox 2 low and high ranges are obtained through the internal ring gear 22 being displaced axially between the low range position, in which the internal ring gear 22 is rotationally locked relative to the gearbox housing 12, and high range position in which the internal ring gear 22 is rotatable relative to the gearbox housing 12. The axial displacement of the internal ring gear 22 is achieved by a gear shift fork (not shown) arranged in the groove 32 around the circumference of the internal ring gear 22. The planetary gear 14 comprises two coupling rings 34, 35 arranged on either side of the internal ring gear 22, a high coupling ring 34 and a low coupling ring 35, and two synchronizer rings 36 arranged on each side of the internal ring gear 22.

Synchronizer rings 36 are designed to achieve synchronous gear shifting. High coupling ring 34 is non-rotatably connected with the input shaft 16 by means of splines 28 and the low coupling ring 35 is non-rotatably connected with the gearbox housing 12. Coupling rings 34, 35 and synchronizer rings 36 are provided with interacting friction surfaces 38, 39, which is preferably of a conical design. In the embodiment shown both synchronizer rings 36 have the same design, but are mounted back to back on either side of the internal ring gear 22. Significantly ring shaped locking devices 50 are arranged in each groove 52 in the internal ring gear 22. In each synchronizer ring 36 there is also a circumferential external groove 54 intended for the locking devices 50.

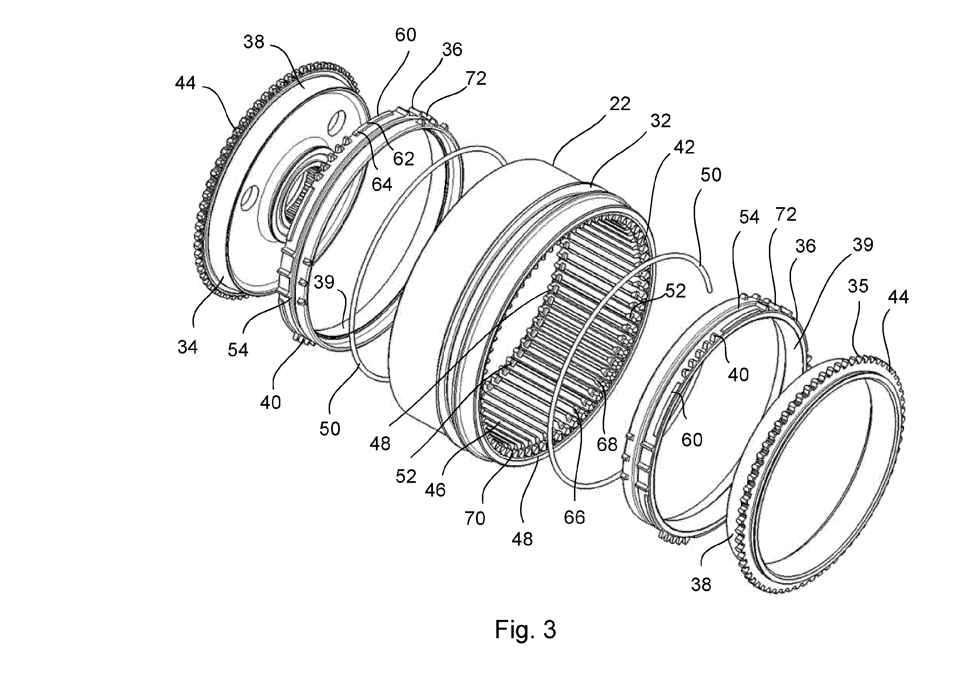

Figure 3 shows a perspective view of the components of a gearbox 2 of the present invention. The two synchronizer rings 36 are provided with external locking teeth 40, which in a conventional manner during the synchronization process lock the gear shifting movement until synchronous rotation is achieved between the internal ring gear 22 and each coupling ring 34, 35. To obtain a good synchronization function in the gearbox 2, the surface of the teeth 40 of the synchronizer ring 36, which face the internal ring gear 22 and which are intended to engage the teeth 42 of the internal ring gear 22 during synchronization, should preferably be provided with an angle, called a locking angle, relative to the axis of rotation 30 of the synchronizer ring 36, said locking angle shall be balanced against the braking torque transmitted by the synchronizer ring 36 to the internal ring gear 22 in order to achieve synchronous speed. This means that said locking angle must be designed so that the teeth on the synchronizer ring 36 engage with that portion of the internal ring gear 22 teeth with the locking angle and act on the internal ring gear 22 in order to achieve synchronous speed and then detach from that portion of the internal ring gear 22 teeth 42 with the locking angle and when the internal ring gear 22 is to engage with the relevant coupling ring 34, 35 when synchronous speed is obtained. To ensure that synchronous speed is achieved before the internal ring gear 22 passes the synchronizer ring 36 axially, the locking teeth 40 of the synchronizer ring 36 do not disengage the internal ring gear 22 teeth 42 too easily.

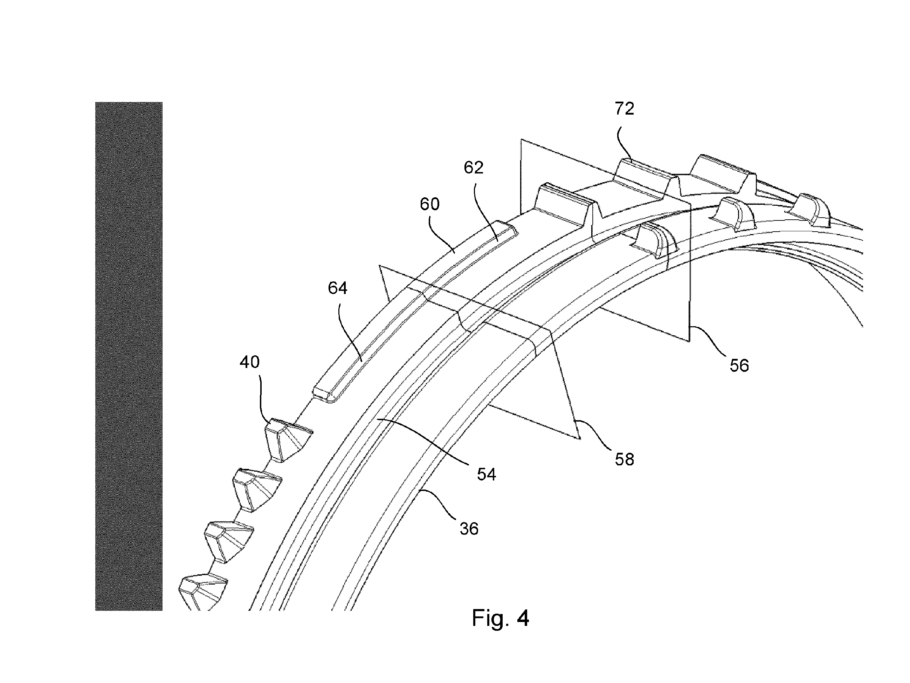

When the teeth 44 of each coupling ring 34, 35 move out of engagement with the internal ring gear 22 teeth 42, each synchronizer ring 36, due to its axial extension into the internal ring gear 22, cannot be displaced all the way out of the internal ring gear 22, and thus lose its orientation relative to other components. The internal ring gear 22 is provided with two internal, circumferential grooves 52, one at each end 48 of the internal ring gear 22. As mentioned above, locking devices 50 are essentially ring shaped and arranged in each groove 52 in the internal ring gear 22. The locking devices 50 can be compressed radially. In each synchronizer ring 36 there is also a circumferential external groove 54 intended for the locking devices 50 in which locking device 50 can be moved during the displacement of the internal ring gear 22. Figure 4 shows a detailed view of a synchronizer ring 36 in a gearbox 2 of the present invention in which the external circumferential groove 54 is clearly visible. Figure 4 also shows a first plane 56 and second plane 58, explained in more detail below.

The locking device 50 is designed as an open, sprung ring, between the free ends of which is a gap when locking device 50 is in position in the internal ring gear 22. The locking device 50 is arranged so that in its rest position in its groove 52 in the internal ring gear 22, it is resiliently fixed in the groove 52. The locking devices 50 are arranged so that, by means of the gear teeth on the internal ring gear 22, they can be compressed radially to a position inside the gear teeth 46 as the internal ring gear 22 is displaced axially so as to bring the relevant synchronizer ring 36 into engagement with its coupling ring 34, 35. Preferably the circumferential internal and external grooves 52, 54 each have a depth equal to or greater than the material thickness of the locking device radially. Locking devices 50 transmit axial force from the internal ring gear 22 to the relevant synchronizer ring 36 in order to bring about contact between the friction surfaces 38, 39 on the relevant synchronizer ring 36 and coupling ring 34, 35 during gear shifting. This means that that an oil film formed between the friction surfaces 38, 39 is displaced and an initial torque between synchronizer ring 36 and coupling ring 34, 35 builds up, forcing the synchronizer ring with its locking teeth 40 to assume a detent position in front of the internal ring gear teeth 42.

The synchronizer rings 36 are provided with external projections 60 with a contact surface 62 which is designed to interact with a circumferential surface 66 on each internal, circumferential groove 52 in the internal ring gear 22 in order to limit the axial movement of the internal ring gear 22.

To obtain a stable fixing of the synchronizer rings 36 in the predetermined position relative to the internal ring gear 22, it is preferable that a number of external projections 60 be arranged and evenly distributed around the circumference of the synchronizer rings 36. This achieves an even load on the synchronizer ring 36, which has a positive effect on the function of the gearbox 2. To further distribute and equalize the load between the synchronizer rings 36 and the internal ring gear 22 the contact surface of the protrusions 60 have a plane 64 inclined relative to normal to the axis of rotation 30 of each synchronizer ring 36. The circumferential surface 66 of each interior, circumferential groove 52 on the internal ring gear 22 is also provided with a plane 68 inclined relative to normal to the axis of rotation 30 of the internal ring gear 22, said inclined planes 64, 68 having essentially the same inclination. The inclined planes 64, 68 each form a conical surface. In the embodiment described the surface 62 of the projection 60 corresponds to the inclined plane 62 and surface 66 in the groove 52 corresponds to the inclined plane 68. It is also possible to execute planes 64, 68 so that its normal essentially coincides with the axis of rotation 30.

This solution with a number of external projections 60 on the synchronizer rings 36 also means that the manufacture and installation of the gearbox 2 is simple. The projections 60 are preferably situated by the side of each synchronizer ring 36 that is closest to each coupling ring 34,35 to allow the movement of synchronizer rings 36 in the internal ring gear 22 during the synchronization process. Projections 60 preferably have a smaller radial extension than that of the locking teeth 40 and a smaller radial extension than the internal radius of a portion of the internal ring gear 22 located between each circumferential slot and the ends of the internal ring gear 22. This allows the movement of the synchronizer rings 36 in the internal ring gear 22 during the synchronization process.

In the embodiment shown two synchronizer rings 36 are arranged in the gearbox. However, it is possible to arrange several synchronizer rings 36 interacting with each other on either side of the internal ring gear 22.

The synchronizer rings 36 are not only rotatable in a limited manner relative to the internal ring gear 22 but also have external locking teeth 40, which during a gear shifting movement lock the axial displacement of the internal ring gear 22 and connection to the relevant coupling ring 34, 35 before synchronous rotation is achieved.

The ends 48 of the internal ring gear 22 are provided with internal coupling teeth 70 which are intended to interact with the gear teeth 44 on the coupling rings 34, 35. The coupling teeth 70 and the gear teeth 46 on the internal ring gear 22 are preferably, as in the example illustrated here, integrated with each other.

The locking devices 50 each comprise an annular curved wire, appropriately with a circular cross section, which is resiliently fixed in the respective groove 52, 54 and thus has a predetermined gap between its opposite ends. This gap allows a certain radial compression of the locking devices 50, as will be described below. It is also possible to execute the locking devices with a rectangular or square cross section for example.

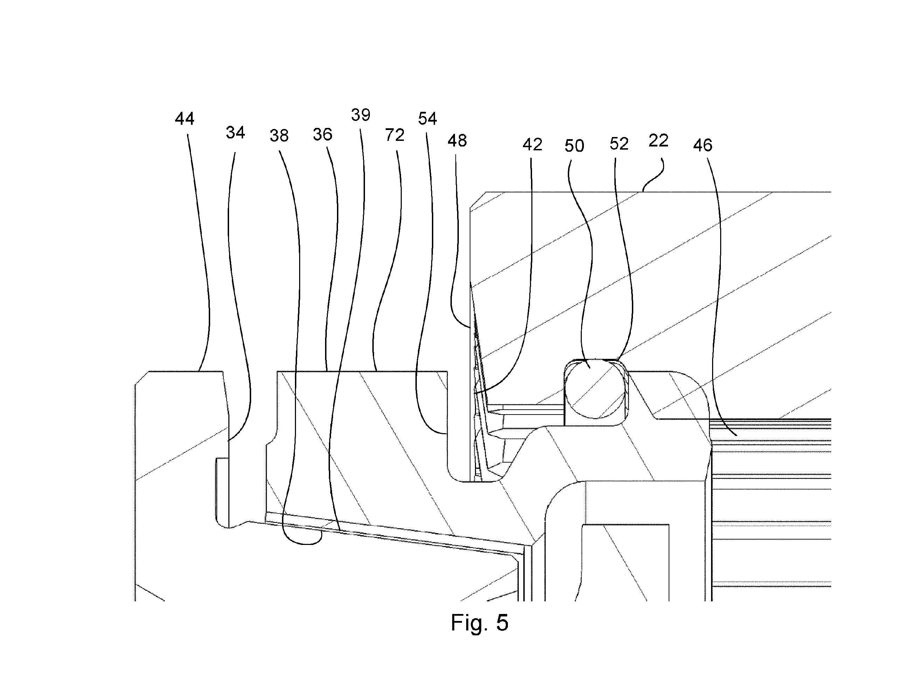

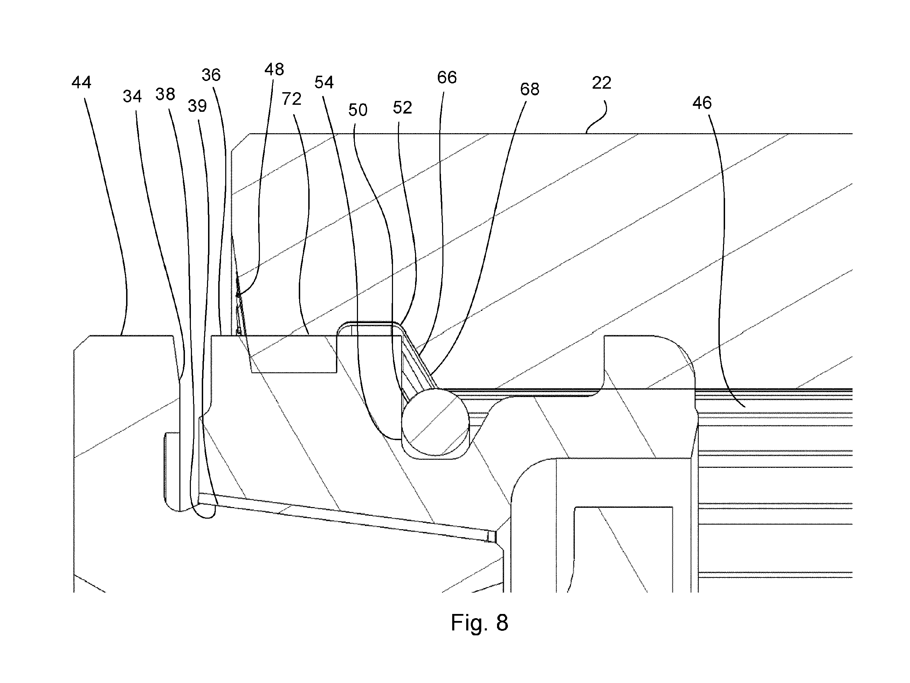

The gearbox 2 according to the invention operates as follows and should be described in connection with Figures 5-9, that refers to a cross section at synchronizer ring 36 through a first plane 56 in Figure 4. From a position shown in Figure 5 where the internal ring gear 22 is disengaged from the coupling ring 34, the locking device 50 rests in the groove around the circumference of the internal ring gear 22. In this position the conical friction surfaces 38, 39 of the coupling ring 34 and synchronizer ring 36 are separated from each other. In Figure 5 the internal ring gear 22 and synchronizer ring 36 are stationary while the coupling ring 34, which is connected to the input shaft 16, is rotating. As a result the gearbox 2 works in low range mode, where downshifting takes place in gearbox 2. To shift to the high range position the internal ring gear 22 shall be displaced by the gear shift fork (not shown) to the left in Figure 5, in order to be connected with the rotating coupling ring 34. Because the internal ring gear 22 is stationary and the coupling ring 34 rotates the internal ring gear 22 must be rotated at essentially the same speed as the coupling ring 34 before the connection is made between the internal ring gear 22 and coupling ring 34.

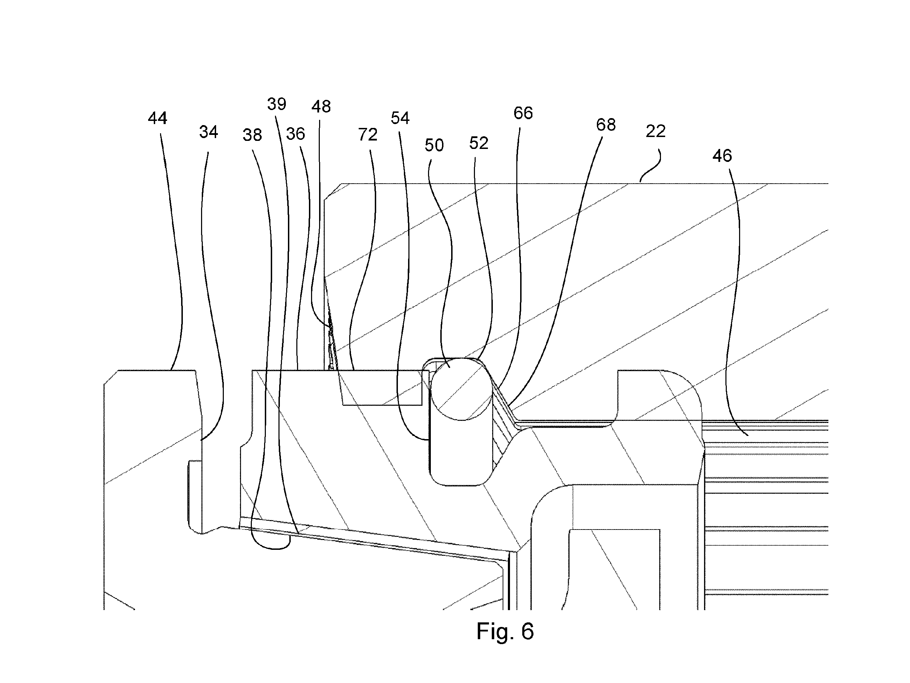

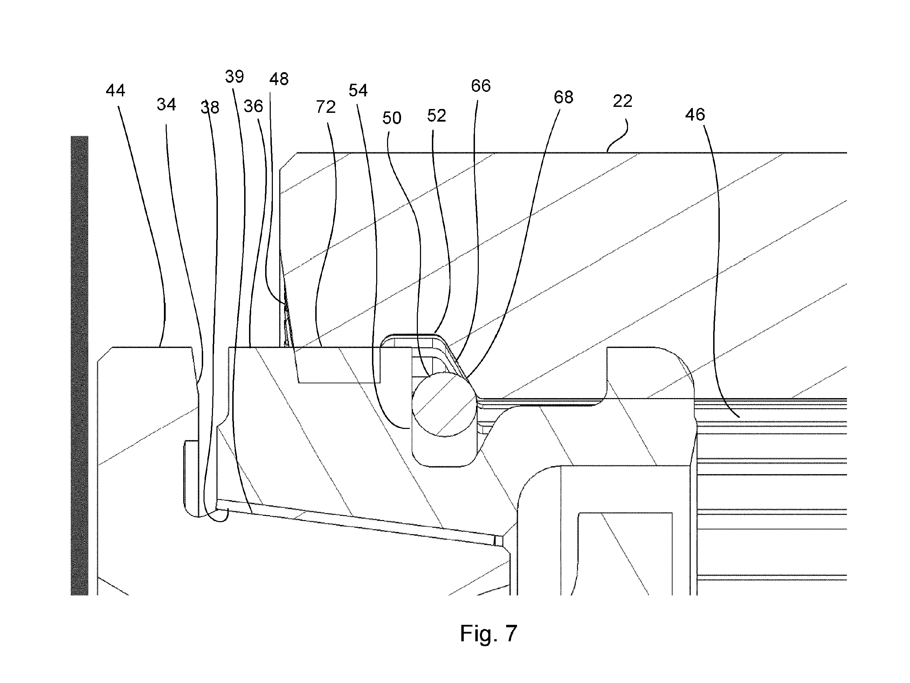

When the internal ring gear 22 is displaced to the left in Figure 5, the locking device 50 will be in contact with the bars 72 arranged on the outside of synchronizer ring 36, the purpose of which are to interact with locking device 50 and also interact with the internal gear teeth 46 in the internal ring gear 22. Figure 6 shows how the internal ring gear 22 has been displaced in order to be in contact with the bars 72. During the further displacement of the internal ring gear 22 the conical friction surface 39 of the synchronizer ring 36 will be pressed against the conical friction surface 38 of the coupling ring 34, which means that the rotating coupling ring 34 slowly starts to pull the synchronizer ring 36, which therefore starts to rotate which in turn means that internal ring gear 22 also starts to rotate. A further displacement of the internal ring gear 22 means that the locking device 50 will be compressed radially so that the gap between its ends is reduced. This means that the locking device 50 will be pressed down into the circumferential groove 54 of synchronizer ring 36, as shown in Figures 7-9. The compression of the locking device 50 is facilitated by the inclined surface 66 of the circumferential groove 52 in internal ring gear 22, which forms a transition between the groove 52 and the radially internal surface of the internal ring gear 22 gear teeth 46.

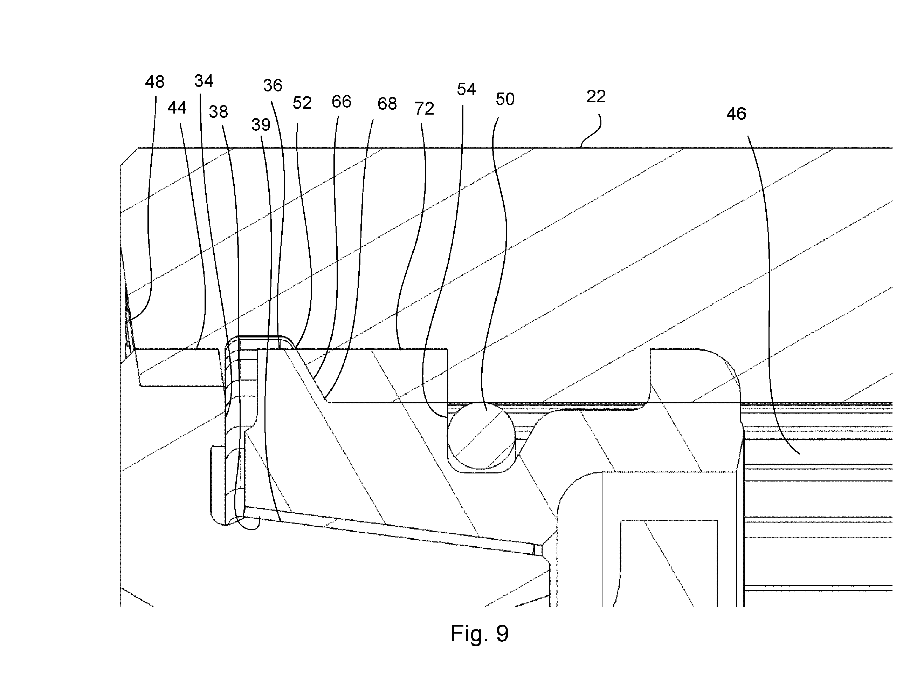

The external locking teeth 40 on the synchronizer rings 36 lock the gear shifting movement in a conventional manner until synchronous rotation is achieved between the internal ring gear 22 and the coupling ring 34, whereupon the coupling teeth 70 on the internal ring gear 22, on reaching synchronisation, can be inserted between the gear teeth of the coupling ring 34 so that the internal ring gear 22, the synchronizer ring 36 and coupling ring 34 are in the position shown in Figure 9.

The bars 72 on the outside of the synchronizer ring 36 bring about further circumferential locking, with some play, between the internal ring gear 22 and the synchronizer ring 36. This is accomplished because there is a certain internal circumferential play because the bars 72 are circumferentially narrower than the gaps between the gear teeth 46 in the internal ring gear 22. This facilitates synchronization and gear engagement.

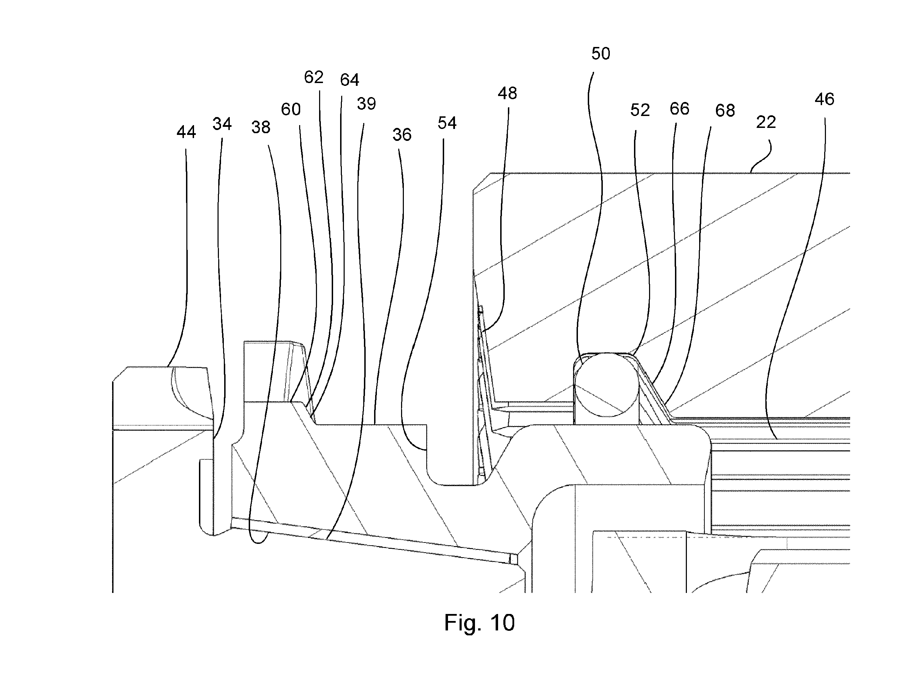

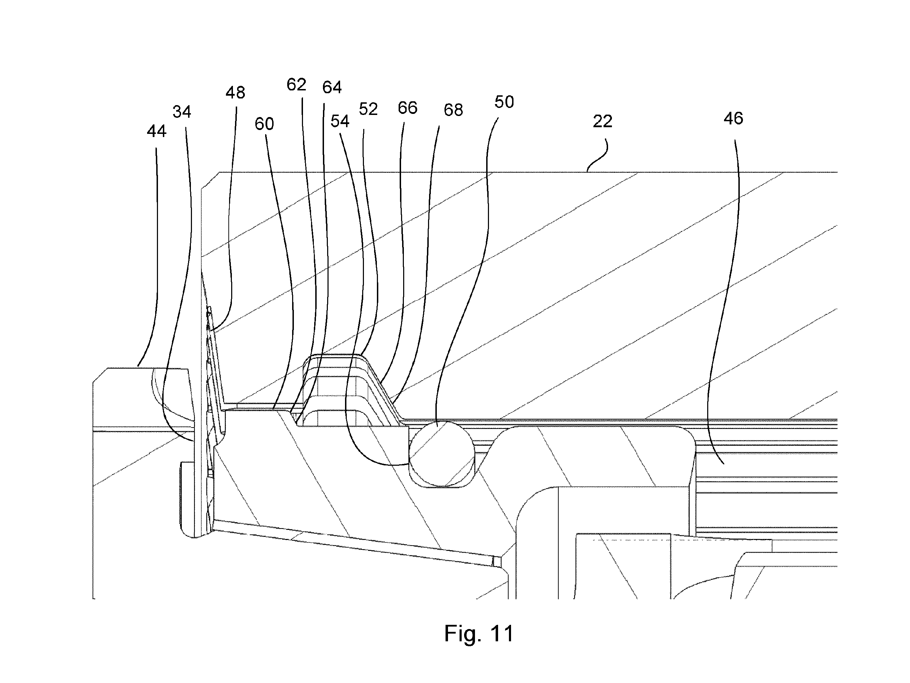

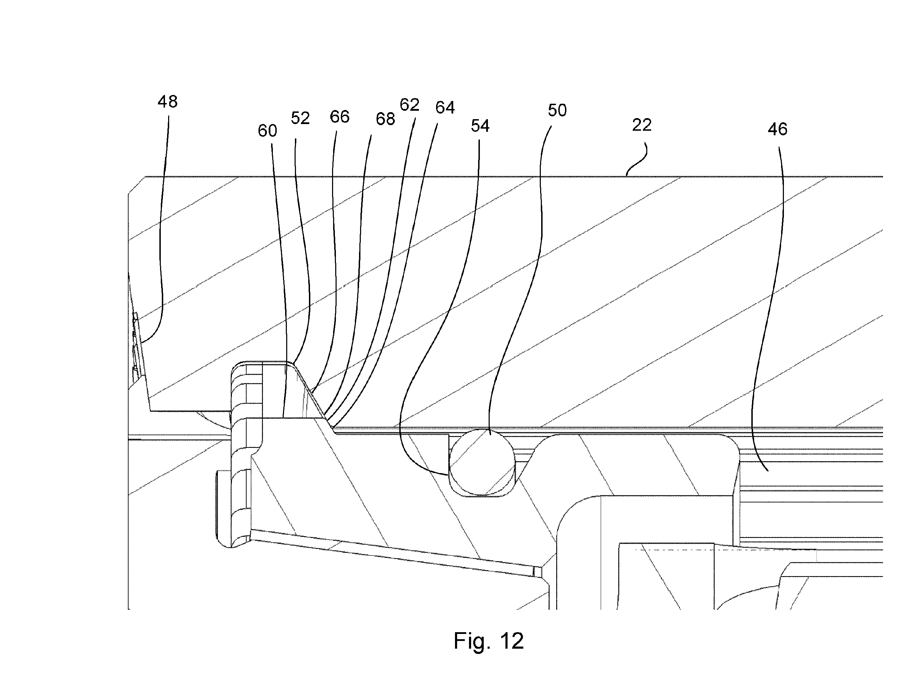

At the same time as the gear shifting sequence described in Figures 5-9 is executed the projections 60 configured on the synchronizer ring 36 are also passed by the end 48 of the internal ring gear 22, as shown in Figures 10-12, which refers to a cross section through synchronizer ring 36 by a second plane 58 in Figure 4. The relative position between the internal ring gear and projection 60 shown in Figure 10 essentially corresponds to that shown in Figure 5. Because the projections 60 have a smaller radial extension than the internal radius of that portion of the internal ring gear 22, located between the circumferential groove 52 in the internal ring gear 22 and the ends of the internal ring gear 22, the internal ring wheel 22 will be displaced so that the projections 60 pass the end of the internal ring gear 22, as shown in Figure 11.

During the continued displacement of the internal ring gear 22 the projections 60, designed with an inclined contact surface 62, will interact with the circumferential inclined surface 66 of the internal, circumferential groove 52 on the internal ring gear 22 in order to limit the axial movement of the internal ring gear 22. The inclined planes 64, 68 that form the contact surfaces between the projections 60 and the circumferential groove 52 in the internal ring gear 22 essentially have the same inclination, evening out the load across the contact surfaces between the synchronizer rings 36 and the internal ring gear 22. This contact surfaces 62, 66 design between the projection 60 and the circumferential groove 52 also contributes to essentially noiseless gear shifting.

When the high range mode is engaged, as described above, the internal ring gear 22, synchronizer ring 36 and coupling ring 34 will rotate as an interconnected unit, and the axial force from the internal ring gear 22 will be transmitted through contact surfaces 62, 66 between the projections 60 and the circumferential groove 52 in the internal ring gear 22, and on to the coupling ring 34 through the conical friction surfaces 38, 39 between the synchronizer rings and coupling rings 34.

The gear shifting sequence on the low range side takes place in a similar manner, but differs in that the internal ring gear 22 aided by synchronizer ring 36 is to be braked from a rotating to a stationary state.

The torque during a gear shifting sequence that affects both synchronizer rings 36 is directed in the same direction for a particular direction of rotation of the input shaft 30, for example when driving forwards as the input shaft 30 has a definite direction of rotation. When reversing the vehicle 1, the direction of rotation of the input shaft 30 will be reversed, with the result that the torque acting on synchronizer rings 36 changes direction. To facilitate synchronized gear shifting when driving forwards and reversing, it is desirable that the locking teeth 40 on the synchronizer rings 36 have an appropriate shape, i.e. have a shape such that the synchronizer rings 36, when synchronization has been achieved, can be rotated to a position which allows gear engagement through a completed axial movement of internal ring gear 22. This configuration can be selected according to needs and preferences.

The gearbox 2 described above has advantages when it comes to manufacturing and installation as the necessary machining of component parts is simple and, in addition, the number of component parts is small. The design is also such that the space requirements both axially and radially are negligible. The gearbox 2 described can also be used in other circumstances to those described above. For example it is possible to use it for hydraulic automatic gearboxes where a number of gearboxes with planetary gears are joined together. Furthermore the invention can be used in that type of synchronization device where a number of synchronizer rings are arranged on either side of the planetary gear.

The components and features indicated above can, within the scope of the invention, be combined in different specified embodiments.

## Claims

1. Gearbox for vehicles, comprising
a planetary gear set (14) with an axially displaceable internal ring gear (22);
two coupling rings (34, 35) on either side of the planetary gear (14) with which the internal ring gear (22) can be switched between gearbox ranges;
at least two synchronizer rings (36), of which there is at least one synchronizer ring (36) between each coupling ring (34, 35) and planetary gear (14), said synchronizer rings (36) being not only rotatable in a limited manner relative to the internal ring gear (22) but also have external locking teeth (40), that during the gear shifting movement lock the axial displacement and connection with the relevant coupling ring (34, 35) of the internal ring gear (22) before synchronous rotation is achieved;
wherein the ends (48) of internal ring gear (22) have internally arranged locking devices (50) for transmitting axial force from the internal ring gear (22) to the relevant synchronizer ring (36) in order to achieve contact between friction surfaces (38, 39) on the relevant synchronizer ring (36) and coupling ring (34, 35) during gear shifting, **characterised by** the internal ring gear (22) having two internal circumferential grooves (52), one at each end of (48) of the internal ring gear (22); and
that the synchronizer rings (36) are provided with at least one external projection (60) with a contact surface (62) designed to interact with a circumferential surface (66) on each internal, circumferential groove (52) on the internal ring gear (22) in order to limit the axial movement of the internal ring gear (22).

2. Gearbox according to claim 1, **characterised by** a number of projections (60) evenly distributed around the circumference of the synchronizer rings (36).

3. Gearbox according to claim 1, **characterised by** at least one projection (60) being located by the side of each synchronizer ring (36) that is situated closest to each coupling ring (34, 35).

4. Gearbox according to claims 1 or 3, **characterised by** at least one projection (60) having a smaller radial extension than the radial extension of the locking teeth (40).

5. Gearbox according to any of claims 1, 3-4, **characterised by** at least one projection (60) has a smaller radial extension than the internal radius of a portion of the internal ring gear (22) located between each circumferential groove (52) and the ends (48) of the ring wheel (22).

6. Gearbox according to any of claims 1, 3-5, **characterised by** the contact surface (62) of at least one projection (60) having an inclined plane (64) relative to a plane normal to the axis of rotation (30) of the synchronizer ring (36).

7. Gearbox according to claim 6, **characterized be** the circumferential surface (66) of each internal, circumferential groove (52) in the internal ring gear (22) has an inclined plane (68) relative to a plane normal to the axis of rotation (30) of the 22 rotation axis.

8. Gearbox according to claims 6 and 7, **characterized by** inclined planes (64, 68) essentially having the same inclination.

9. Gearbox according to any of the preceding claims, **characterized by** each groove (52) being provided with an essentially annular locking device (50) which is radially compressible, and that arranged in each synchronizer ring (36) is a circumferential external groove (54) in which the locking device (50) can be moved when the internal ring gear (22) is displaced.

10. Gearbox according to any preceding claim, **characterized by** each locking device (50) being designed as an open, resilient ring (50) between the free ends of which there is a gap for the locking device (50) in the internal ring gear (22), and the resilient rings (50) being arranged in their rest position in the groove (52) in the internal ring gear (22) to be resiliently fixed in the groove (52).

11. Gearbox according to claim 10, **characterised by** the resilient rings (50) being arranged so that they can be compressed radially by means of the gear teeth (46) on the internal ring gear (22) to a position inside the gear teeth (46) when the internal ring gear (22) is displaced axially in order to bring the relevant synchronizer ring (36) into contact with its coupling ring (34, 36).

12. Gearbox according to any of claims 10 or 11, **characterized by** the circumferential internal and external grooves (52, 54) each having a depth equal to or greater than the radial material thickness of the resilient rings (50).

13. Vehicle (1), **characterized by** it comprising a gearbox (2) according to any of claims 1-12.
